# EUROPÄISCHE PATENTSCHRIFT

(11) **EP 2 825 968 B1**
(45) Veröffentlichungstag und Bekanntmachung des Hinweises auf die Patenterteilung: **16.08.2017**
(21) Anmeldenummer: 13704380.8
(22) Anmeldetag: 31.01.2013
(51) Int. Cl.: G06F 13/40

(54) **MODULARES SERVERSYSTEM, I/O-MODUL UND SWITCHING-VERFAHREN**
MODULAR SERVER SYSTEM, I/O MODULE AND SWITCHING METHOD
SYSTÈME DE SERVEURS MODULAIRE, MODULE I/O ET PROCÉDÉ DE COMMUTATION

(30) Priorität: 15.03.2012 DE 102012102198
(43) Veröffentlichungstag der Anmeldung: 21.01.2015
(73) Patentinhaber: Fujitsu Limited, Kawasaki-shi Kanagawa 211-8588 (JP)
(72) Erfinder: SCHRÄDER, Bernhard, 33129 Delbrück (DE); KLEINEBERG, Michael, 33165 Lichtenau (DE); NGUYEN, Van Son, 48231 Warendorf (DE)
(74) Vertreter: Epping - Hermann - Fischer
(86) Internationale Anmeldenummer: PCT/EP2013/051947
(87) Internationale Veröffentlichungsnummer: WO 2013/135424

(56) Entgegenhaltungen:
- US-A1- 2006 031 389
- US-A1- 2012 005 392
- US-B1- 7 818 387

## Beschreibung

Die vorliegende Erfindung betrifft ein modulares Serversystem, umfassend eine Mehrzahl von Servermodulen und eine Mehrzahl von I/O-Komponenten. Die Erfindung betrifft des Weiteren ein I/O-Modul und ein Switching-Verfahren für ein derartiges modulares Serversystem.

Modulare Serversysteme sind aus dem Stand der Technik bekannt. Beispielsweise sind so genannte Bladeserversysteme bekannt, bei der eine Mehrzahl von Bladeservermodulen, die jeweils wenigstens einen Prozessor und zugehörigen Arbeitsspeicher aufweisen, auf eine gemeinsam genutzte Infrastruktur, insbesondere auf Netzteile, Netzwerkswitches und/oder Massenspeicherkomponenten zugreifen. Die nötigen Verbindungen zwischen den Bladeservermodulen und den gemeinsam genutzten I/O-Komponenten werden dabei in der Regel über eine so genannte Midplane, eine passive, gemeinsam genutzte Leiterplatte des Bladeserversystems, hergestellt.

Aus dem Stand der Technik sind auch andere, mehr oder weniger modulare Serversysteme bekannt. Beispielsweise sind Servermodule in der Form von Rackservern bekannt, die in ein gemeinsames Rackgehäuse eingeschoben werden und über Kabelverbindungen auf gemeinsame Netzwerkswitches zugreifen.

Sollen mehrere Servermodule mit einer Mehrzahl von I/O-Komponenten verbunden werden, bestehen für deren datentechnische Kopplung unterschiedliche Möglichkeiten.

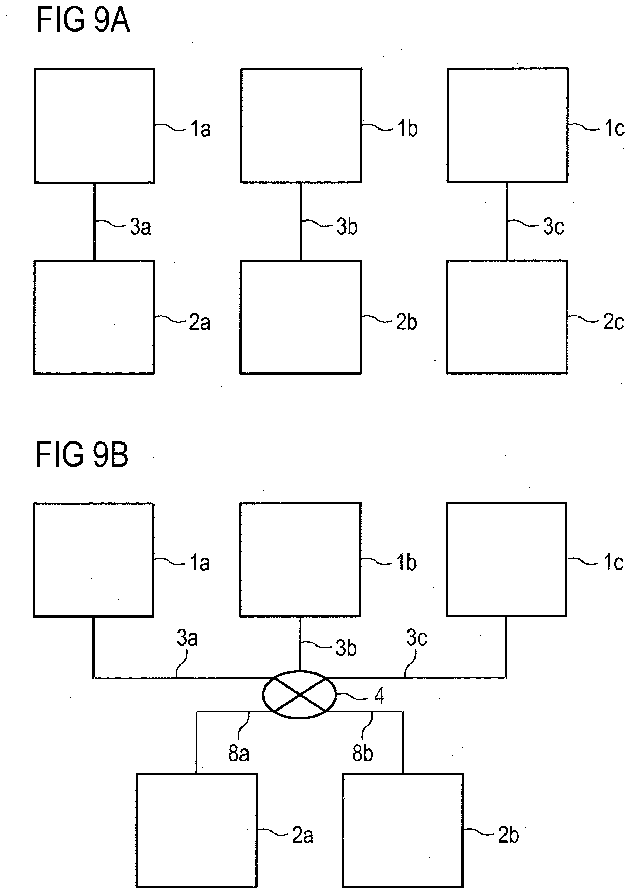

Die Figur 9A zeigt eine erste Möglichkeit, eine Mehrzahl von I/O-Komponenten mit einer Mehrzahl von Servermodulen zu verbinden. In der in der Figur 9A dargestellten Architektur ist jedem Servermodul 1a bis 1c genau eine I/O-Komponente 2a bis 2c direkt zugeordnet. Die Zuordnung zwischen den Servermodulen 1a bis 1c und den entsprechenden I/O-Komponenten 2a bis 2c erfolgt über elektrische Verbindungen 3a bis 3c eines Serversystems. Wegen der direkten Zuordnung von den I/O-Komponenten 2a bis 2c zu den Servermodulen 1a bis 1c können dazwischen angeordnete Verbindungen 3a bis 3c verhältnismäßig einfach ausgestaltet sein. Insbesondere kann es sich um Leiterbahnen auf einer Backplane oder um andere passive elektrische Verbindungen handeln.

Die in der Figur 9A dargestellte Architektur besitzt den Nachteil, dass beim Ausfall einer beliebigen I/O-Komponente 2a bis 2c oder Verbindung 3a bis 3c das zugehörige Servermodul 1a bis 1c ihm zugeordnete Aufgaben nicht länger ausführen kann und somit nicht länger zur Verfügung steht. Des Weiteren ist die in der Figur 9A dargestellte Architektur verhältnismäßig ineffizient, da I/O-Komponenten 2a bis 2c, wie beispielsweise Netzwerkkarten, für jedes Servermodul 1a bis 1c getrennt bereitgestellt werden müssen, selbst wenn jeder der Servermodule 1a bis 1c nur eine geringe Bandbreite erfordert, die über eine einzige Netzwerkkarte gemeinsam für alle Servermodule 1a bis 1c bereitgestellt werden könnte.

Die Figur 9B zeigt eine gegenüber der Figur 9A flexiblere Architektur. Im in der Figur 9B dargestellten Ausführungsbeispiel teilen sich drei Servermodule 1a bis 1c zwei I/O-Komponenten 2a und 2b. Die Verbindungen zwischen den Servermodulen 1a bis 1c und den I/O-Komponenten 2a und 2b werden dabei über ein Switch-Element 4 hergestellt. Dabei verbindet das Switch-Element 4 erste Verbindungen 3a bis 3c zwischen den Servermodulen 1a bis 1c und dem Switch-Element 4 wahlweise mit zweiten Verbindungen 8a und 8b zwischen dem Switch-Element 4 und den I/O-Komponenten 2a bzw. 2b. Auf diese Weise kann, beispielsweise gesteuert durch Adressinformationen in den ausgetauschten Daten, eine wahlfreie Verbindung zwischen einem beliebigen Servermodul 1a bis 1c und einer beliebigen I/O-Komponente 2a oder 2b hergestellt werden.

Die beschriebene Architektur besitzt den Vorteil, dass I/O-Komponenten 2a und 2b gemeinsam von den Servermodulen 1a bis 1c genutzt werden können, was sowohl die Auslastung der einzelnen I/O-Komponenten 2a und 2b als auch deren Verfügbarkeit erhöht. Beispielsweise kann eine einzelne Netzwerkkarte von allen drei Servermodulen 1a bis 1c gemeinsam genutzt werden. Handelt es sich bei den I/O-Komponenten 2a und 2b um vergleichbare Komponenten, beispielsweise um zwei typgleiche Netzwerkkarten, können auch beim Ausfall einer der zwei I/O-Komponenten 2a oder 2b sämtliche Servermodule 1a bis 1c noch erfolgreich Netzwerkverbindungen herstellen.

Ein Nachteil der in der Figur 9B dargestellten Architektur besteht darin, dass die Verbindung zwischen den Servermodulen 1a bis 1c einerseits und den I/O-Komponenten 2a und 2b andererseits, auch als so genannte Connection Fabric bezeichnet, verhältnismäßig kompliziert ist. Zum einen ist zum Herstellen der Verbindungen 3 eine aktive Komponente, nämlich das Switch-Element 4 erforderlich, das sowohl die Herstellungskosten als auch die Komplexität des Serversystems erhöht. Wird, wie in der Figur 9B dargestellt, ein einzelnes Switch-Element 4 zur Herstellung sämtlicher Verbindungen verwendet, ergibt sich zusätzlich das Problem eines so genannten "Single Point of Failure", bei dessen Ausfall sämtliche Servermodule 1a bis 1c ausfallen. Darüber hinaus könnte ein derartiges Switch-Element 4 nur in einer zentralen Komponente des modularen Serversystems, beispielsweise einer Backplane oder Midplane angeordnet werden, was deren Kosten erheblich erhöhen würde.

Ein weiteres, gewichtiges Problem der Architektur gemäß Figur 9B liegt darin, dass insbesondere bei der Verwendung von mehradrigen Verbindungen 3a bis 3e sowie 8a und 8b, wie sie besonders bei besonders leistungsfähigen Bussystemen wie dem so genannten PCI-Express-Standard Verwendung finden, die Anzahl der zu verschaltenden Leitungen sehr stark mit der Anzahl der verwendeten Servermodule und I/O-Komponenten ansteigt. Aus dem in der Figur 9B dargestellten 3x2-Switch-Element 4 wird bei einem Serversystem mit m Servermodulen und n I/O-Komponenten ein in der Herstellung sehr aufwändiges *mxn*-Switch-Element. Bei wachsender Anzahl von Switchverbindungen zu Servermodulen 1 und I/O-Komponenten 2 wird die Implementierung des Switch-Elementes 3 zunehmend schwierig. Darüber hinaus wird es insbesondere bei den angesprochenen Bussystemen schwierig, sämtliche erforderlichen Leitungen auf einer gemeinsamen Leiterplatte wie insbesondere einer Midplane anzuordnen. Aus diesem Grunde sind derartige Architekturen nur in verhältnismäßig kleinen Serversystemen mit wenigen Komponenten oder für elektrische Verbindungen mit einer oder wenigen Leitungen sinnvoll.

Die US 2012/0005392 A1 offenbart ein Informationsverarbeitungs-system mit einem Server-Chassis mit
- einer Vielzahl von Server-Blades und
- einem ersten PCIe-Switch, der mit den Server-Blades verbunden ist,
- ein I/O-Chassis mit einer Vielzahl von PCIe-Steckplätzen,
- an denen Input-Output-Geräte angeschlossen sind,
- und einen zweiten PCIe-Switch an dem die PCIe-Steckplätze angeschlossen sind,
- wobei der erste PCIe-Switch und der zweite PCIe-Switch durch einen PCIe-Kabel verbunden sind.

Aus der US 7 818 387 B1 ist ein kombiniertes Switch- und Serviceprozessormodul und aus der der US 2006/0031389 A1 ist ein Computersystem und Verfahren zum Konfigurieren eines Speichersystems bekannt.

Aufgabe der vorliegenden Erfindung ist es, eine alternative Architektur für modulare Serversysteme und Verfahren zu deren Betrieb zu beschreiben. Die beschriebenen Lösungen sollen sich insbesondere für hochleistungsfähige Clusteranwendungen und/oder Hochverfügbarkeitssysteme eignen.

Gemäß einem ersten Aspekt der Erfindung werden modulare Serverarchitekturen beschrieben, die eine Kopplung einer Mehrzahl von Servermodulen mit einer Mehrzahl von I/O-Komponenten gestatten.

Gemäß einer ersten Ausgestaltung der Erfindung wird ein modulares Serversystem beschrieben, das eine Mehrzahl von Servergruppen umfasst, wobei jede Servergruppe zur Aufnahme einer Mehrzahl von Servermodulen eingerichtet ist. Das Serversystem umfasst weiterhin eine Mehrzahl von I/O-Gruppen, wobei jede I/O-Gruppe zur Aufnahme einer Mehrzahl von I/O-Komponenten eingerichtet ist und eine Switch-Anordnung mit mindestens einem Switch-Element aufweist. Dabei ist jede der Mehrzahl von I/O-Gruppen genau einer der Mehrzahl von Servergruppen zugeordnet. Die Switch-Anordnung einer jeden I/O-Gruppe ist mit jedem der Mehrzahl der I/O-Komponenten der I/O-Gruppe und mit jedem der Mehrzahl der Servermodule der der I/O-Gruppe zugeordneten Servergruppe datentechnisch direkt gekoppelt. Darüber hinaus ist die Switch-Anordnung einer jeden I/O-Gruppe mit mindestens einer anderen Switch-Anordnung einer anderen I/O-Gruppe datentechnisch gekoppelt.

Durch die Aufteilung von Servermodulen und I/O-Komponenten in Servergruppen und I/O-Gruppen sowie die direkte Zuordnung von I/O-Gruppen zu genau einer Servergruppe kann eine modulare, verteilte Switcharchitektur für ein modulares Serversystem implementiert werden. Dabei werden I/O-Komponenten einer I/O-Gruppe über eine Switch-Anordnung mit mindestens einem Switch-Element der I/O-Gruppe auf relativ kurzem Wege mit zugehörigen Servermodulen einer zugehörigen Servergruppe verbunden, so dass eine verhältnismäßig kleine Anzahl von Servermodulen auf eine verhältnismäßig kleine Anzahl von I/O-Komponenten mit hoher Bandbreite und geringer Latenz zugreifen kann. Andere Verbindungen, also auf I/O-Komponenten von I/O-Gruppen, die einer anderen Servergruppe zugeordnet sind, erfolgen dabei über weitere Verbindungen zwischen Switch-Anordnungen beziehungsweise die darin enthaltenen Switch-Elemente.

Gemäß einer alternativen Ausgestaltung der Erfindung wird ein modulares Serversystem beschrieben, das eine Mehrzahl von Servergruppen umfasst, wobei jede Servergruppe zur Aufnahme einer Mehrzahl von Servermodulen eingerichtet ist und eine Switch-Anordnung mit mindestens einem Switch-Element aufweist. Das Serversystem umfasst weiterhin eine Mehrzahl von I/O-Gruppen, wobei jede I/O-Gruppe zur Aufnahme einer Mehrzahl von I/O-Komponenten eingerichtet ist. Dabei ist jede der Mehrzahl von Servergruppen genau einer der Mehrzahl von I/O-Gruppen zugeordnet. Die Switch-Anordnung einer jeden Servergruppe ist mit jedem der Mehrzahl der Servermodule der Servergruppe und mit jedem der Mehrzahl der I/O-Module der der Servergruppe zugeordneten I/O-Gruppe datentechnisch direkt gekoppelt. Darüber hinaus ist die Switch-Anordnung einer jeden Servergruppe mit mindestens einer anderen Switch-Anordnung einer anderen Servergruppe datentechnisch gekoppelt.

Das modulare Serversystem gemäß der alternativen Ausgestaltung weist im Wesentlichen dieselben Eigenschaften auf wie das der ersten Ausgestaltung, wobei die logische Zuordnung zwischen Servergruppen einerseits und I/O-Gruppen andererseits vertauscht ist.

Ein Vorteil dieser verteilten Switcharchitekturen liegt darin, dass die Anzahl der Leitungen und somit der Kosten für die so genannte Connection Fabric nicht exponentiell mit der Systemgröße, sondern lediglich mit der Größe der verwendeten Servergruppen und/oder I/O-Gruppen ansteigt. Auf diese Weise können die Komplexität und Kosten des modularen Serversystems reduziert werden, wobei ein hoher Grad an Performance, Verfügbarkeit und Redundanz sichergestellt werden kann.

Gemäß einer bevorzugten Ausgestaltung werden die Verbindungen zwischen den einzelnen Komponenten über eine gemeinsame Leiterplatte, insbesondere eine Backplane oder eine Midplane des modularen Serversystems hergestellt. Bevorzugt sind auf der gemeinsamen Leiterplatte lediglich passive Komponenten, insbesondere elektrische Verbindungen in der Form von Leiterbahnen zur datentechnischen Kopplung der einzelnen Komponenten aufgebracht.

Das beschriebene Serversystem eignet sich insbesondere zur datentechnischen Kopplung von Punkt-zu-Punkt-Verbindungen mit einer Mehrzahl von Datenleitungen, wie beispielsweise Verbindungen gemäß dem PCI-Express-Standard.

Bevorzugt handelt es sich bei den I/O-Komponenten um von einer Mehrzahl von Servermodulen gemeinsam nutzbare Komponenten, beispielsweise Netzwerkkomponenten mit einer Mehrzahl von virtuellen und/oder physikalischen Funktionseinheiten oder um Massenspeicherkomponenten wie sogenannte Solid State Disks (SSD) und Host Bus Adapter (HBA).

Gemäß einem zweiten Aspekt der Erfindung wird ein I/O-Modul zur Verwendung in einem modularen Serversystem beschrieben. Das I/O-Modul umfasst wenigstens eine Modulleiterplatte, wenigstens einen auf der Modulleiterplatte angeordneten ersten Anschluss für eine erste I/O-Komponente, wenigstens einen auf der Modulleiterplatte angeordneten zweiten Anschluss für eine zweite I/O-Komponente und wenigstens einen auf der Modulleiterplatte angeordneten Steckverbinder zur datentechnischen Kopplung des I/O-Moduls mit einer gemeinsamen Leiterplatte des modularen Serversystems. Auf der Modulleiterplatte ist wenigstens ein Switch-Element zum wahlweisen Herstellen von Verbindungen zwischen einer vorbestimmten Gruppe von Servermodulen des modularen Serversystems, die dem I/O-Modul zugeordnet ist, und der ersten und/oder zweiten I/O-Komponente sowie zum Herstellen von Verbindungen zwischen der vorbestimmten Gruppe von Servermodulen des modularen Serversystems und einem gleichartigen I/O-Modul angeordnet.

Ein derartiges I/O-Modul mit einem oder mehreren integrierten Switch-Elementen erlaubt den Aufbau von modularen Serversystemen mit einer gemeinsamen, bevorzugt passiven Leiterplatte. Dabei wird das Herstellen von Verbindungen zwischen der ersten und der zweiten I/O-Komponente und einem der I/O-Modul zugeordneten Servergruppe direkt über ein integriertes Switch-Element vorgenommen. Darüber hinaus können mittelbaren Verbindungen mit anderen I/O-Modulen über ein Switch-Element des I/O-Moduls und ein Switch-Element eines gleichartigen, benachbarten I/O-Moduls hergestellt werden.

Gemäß einem dritten Aspekt der Erfindung wird ein Switching-Verfahren für ein modulares Serversystem beschrieben, bei dem erste Datenverbindungen zwischen einer ersten Komponente eines ersten Typs einer ersten Gruppe von gleichartigen Komponenten, insbesondere zwischen einem Servermodul einer Mehrzahl von Servermodulen einer ersten Servergruppe, mit einer zweiten Komponente eines zweiten Typs einer zweiten Gruppe von gleichartigen Komponenten, insbesondere einer I/O-Komponente einer Mehrzahl von I/O-Komponenten einer ersten I/O-Gruppe, direkt über ein erstes Switch-Element der zweiten Gruppe hergestellt werden. Bei dem Verfahren werden zweite Datenverbindungen zwischen der ersten Komponente der ersten Gruppe mit einer dritten Komponente des zweiten Typs, insbesondere einer I/O-Komponente einer Mehrzahl von I/O-Komponenten einer zweiten I/O-Gruppe, indirekt über das erste Switch-Element der zweiten Gruppe und ein zweites Switch-Element der dritten Gruppe hergestellt.

Ein solches, verteiltes und gegebenenfalls kaskadierbares Switching-Verfahren erlaubt die bedarfsgerechte und einfache Verbindung einer Vielzahl von Servermodulen mit einer Vielzahl von I/O-Komponenten.

Weitere vorteilhafte Ausgestaltungen sind in den angehängten Patentansprüchen sowie der nachfolgenden ausführlichen Beschreibung von Ausführungsbeispielen offenbart.

Die Erfindung ist nach den unabhängigen Ansprüchen definiert. Abhängige Ansprüche stellen weitere Ausführungsformen bereit.

Die Erfindung wird nachfolgend anhand von Ausführungsbeispielen unter Bezugnahme auf die angehängten Figuren näher erläutert. Darin werden die gleichen Bezugszeichen für gleiche oder gleichartige Komponenten unterschiedlicher Ausführungsbeispiele verwendet. Zudem werden einzelne Instanzen einer Mehrzahl von gleichartigen Komponenten zur besseren Unterscheidung durch das Nachstellen eines Suffixes gekennzeichnet. Sofern auf sämtliche Komponenten der gleichen Art Bezug genommen werden soll, wird auf die Verwendung des Suffixes verzichtet.

In den Figuren zeigen:
- Figur 1: ein modulares Serversystem gemäß einer ersten Ausgestaltung der Erfindung,
- Figur 2: Untergruppen eines Serversystem gemäß einer zweiten Ausgestaltung der Erfindung,
- Figur 3: das modulares Serversystem gemäß der zweiten Ausgestaltung der Erfindung,
- Figur 4A: ein Verbindungsdiagramm für eine Untergruppe eines modularen Serversystems,
- Figur 4B: ein Verbindungsdiagramm zwischen verschiedenen Untergruppen eines modularen Serversystems,
- Figur 5: ein modulares Serversystem gemäß einer dritten Ausgestaltung der Erfindung,
- Figur 6: ein modulares Serversystem gemäß einer vierten Ausgestaltung der Erfindung,
- Figur 7: eine Aufsicht auf ein Gehäuse eines modularen Serversystems,
- Figur 8A: eine perspektivische Ansicht eines ersten I/O-Moduls,
- Figur 8B: eine perspektivische Ansicht eines zweiten I/O-Moduls,
- Figur 9A: eine erste Möglichkeit zur Kopplung einer Mehrzahl von Komponenten eines Serversystems und
- Figur 9B: eine zweite Möglichkeit zur Kopplung einer Mehrzahl von Komponenten eines Serversystems.

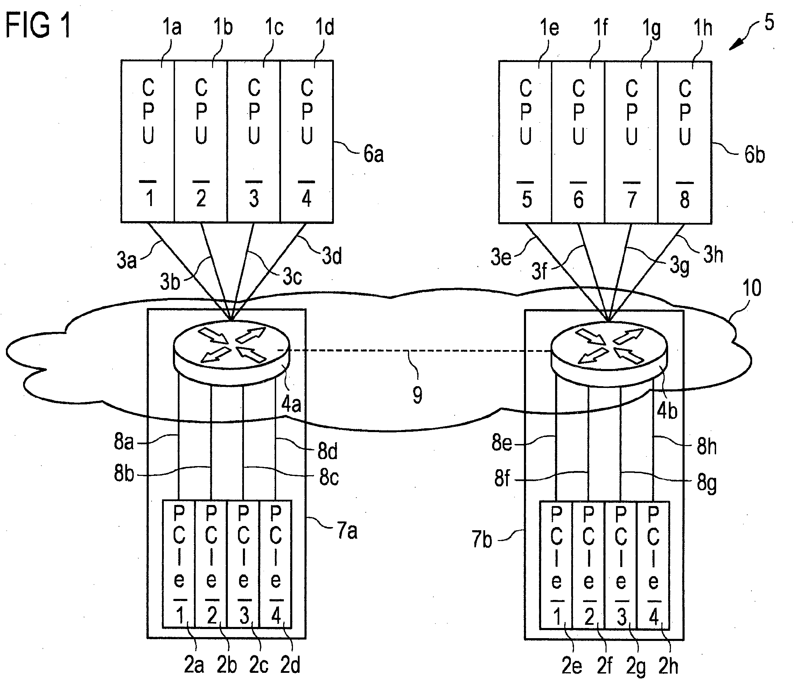

Figur 1 zeigt ein modulares Serversystem 5 gemäß einem ersten Ausführungsbeispiel. Das modulare Serversystem 5 umfasst acht Servermodule 1a bis 1h in zwei Servergruppen 6a und 6b. Jede der Servergruppen 6a und 6b umfasst jeweils vier Servermodule 1a bis 1d beziehungsweise 1e bis 1h. Jedes Servermodul 1 umfasst wenigstens einen Prozessor und typischerweise Arbeitsspeicher zum Ausführen von einem oder mehreren auf dem Serversystem 5 ablaufenden Programmen.

Das modulare Serversystem 5 umfasst des Weiteren acht I/O-Komponenten 2a bis 2h, die ebenfalls in zwei I/O-Gruppen 7a und 7b angeordnet sind. Zusätzlich umfasst jede I/O-Gruppe 7a und 7b ein zugehöriges Switch-Element 4a beziehungsweise 4b. Bei den I/O-Komponenten 2 handelt es sich beispielsweise um Netzwerkkarten, Massenspeicher oder sonstige Erweiterungen, auf die die Servermodule 1 bei der Ausführung von Programmen zugreifen können. Im beschriebenen Ausführungsbeispiel handelt es sich insbesondere um I/O-Komponenten zum Anschluss an einen oder mehrere Servermodule 1 über einen PCI-Express-Bus. Bevorzugt unterstützen die I/O-Komponenten ein so genanntes "PCI-Express device sharing", also deren gleichzeitige Verwendung durch mehrere Root-Geräte wie insbesondere Servermodule 1. Bei den Switch-Elementen 4a und 4b handelt es sich um Switch-Elemente zum Verbinden einer Mehrzahl von PCI-Express-Datenleitungen, auch bekannt als PCI-Express Lanes.

Jeder der Servermodule 1a bis 1d der ersten Servergruppe 6a ist über eine eigene erste Verbindung 3a bis 3d direkt mit dem Switch-Element 4a der ersten I/O-Gruppe 7a verbunden. Darüber hinaus ist jede I/O-Komponente 2a bis 2d der ersten I/O-Gruppe 7a über jeweils eine eigene zweite Verbindung 8a bis 8d direkt mit dem ersten Switch-Element 4a verbunden. In entsprechender Weise sind die Servermodule 1e bis 1h sowie die I/O-Komponenten 2e bis 2h über erste Verbindungen 3e bis 3h beziehungsweise zweite Verbindungen 8e bis 8h mit dem zweiten Switch-Element 4b der zweiten I/O-Gruppe 7b verbunden. Schließlich ist das erste Switch-Element 4a über eine dritte Verbindung 9 mit dem zweiten Switch-Element 4b verbunden. Im Ausführungsbeispiel entsprechen alle Verbindungen 3, 8 und 9 dem PCI-Express-X16 Standard, weisen also jeweils 16 differentielle Datenleitungen zum parallelen Senden und Empfangen von Daten auf. Zusammen stellen die Verbindungen 3a bis 3h, 8a bis 8h und 9 sowie die Switch-Elemente 4a und 4b eine Connection Fabric 10 des modularen Serversystems 5 her, die eine selektive Verbindung eines jeden Servermoduls 1 mit jedem der I/O-Komponenten 2 gestattet. Dabei steht für jede einzelne geschaltete Verbindung innerhalb einer Servergruppe 6 und einer zugehörigen I/O-Gruppe 7 die volle Bandbreite einer PCI-Express-X16 Verbindung zur Verfügung.

Der in der Figur 1 dargestellten Architektur liegt die Erkenntnis zugrunde, dass die Zugriffshäufigkeiten, -dauern und -intensitäten zwischen Servermodulen 1 einerseits und I/O-Komponenten 2 andererseits ungleich verteilt sind. Bevorzugt ist das System so konfiguriert, dass auf lokale I/O-Komponenten 2, beispielsweise Massenspeicherkomponenten mit lokalen Arbeitsdaten für eine CPU eines Servermoduls 1, verhältnismäßig häufig zugegriffen wird, während auf andere I/O-Komponenten 2 nur verhältnismäßig selten zugegriffen wird. In anderen Anwendungsszenarien, beispielsweise redundanten Clustersystemen, ist das System so konfiguriert, dass es auf die primären I/O-Komponenten 2 eines Servermoduls 1 verhältnismäßig häufig zugreift, während es lediglich im Fehlerfall einer primären I/O-Komponente 2 auf eine redundant vorgehaltene sekundären I/O-Komponente 2 zugreift.

Vor dem Hintergrund dieser Erkenntnis besitzt die Architektur gemäß Figur 1 den Vorteil, dass bei entsprechender Verteilung der I/O-Komponenten 2 und Servermodule 1, die Servermodule 1a bis 1d der ersten Servergruppe 6a mit hoher Bandbreite und geringer Latenzzeit über eine dedizierte Datenverbindung auf sämtliche Komponenten 2a bis 2d der ersten I/O-Gruppe 7a zugreifen können. Dabei bleibt der Zugriff auf andere I/O-Komponenten 2e bis 2h der zweiten Servergruppe 7b über die Verbindung 9 im Ausnahmefall möglich, ohne dass hierzu weitere dedizierte Verbindungen zwischen den Servermodulen 1a bis 1d der ersten Servergruppe 6a und dem zweiten Switch-Element 4b erforderlich wären. Stattdessen werden solche Datenverbindungen über eine einzelne oder wenige gemeinsam genutzte dritte Verbindungen 9, beispielsweise im Zeitmultiplex, hergestellt.

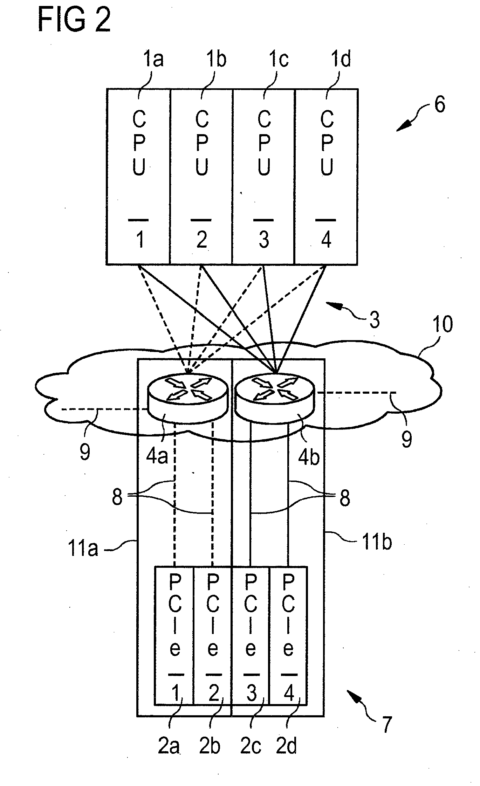

Figur 2 zeigt einen Teil eines modularen Serversystems 5, das insbesondere zur Implementierung von Hochverfügbarkeits-Systemen geeignet ist. In der Konfiguration gemäß Figur 2 greifen vier gleichartige Servermodule 1a bis 1d einer einzelnen Servergruppe 6 auf vier gemeinsam genutzte I/O-Komponenten 2a bis 2d zu. Um eine besonders hohe Verfügbarkeit der I/O-Komponenten 2a bis 2d zu gewährleisten, sind diese in zwei Untergruppen 11a beziehungsweise 11b aufgeteilt. Dabei entsprechen die sekundären I/O-Komponenten 2c und 2d der zweiten Untergruppe 11b funktional den primären I/O-Komponenten 2a und 2b der ersten Untergruppe 11a. Gemeinsam bilden die Untergruppen 11a und 11b eine I/O-Gruppe 7, die der Servergruppe 6 zugeordnet ist.

Zur Gewährleistung der Hochverfügbarkeit ist jeder der Servermodule 1a bis 1d über zwei gesonderte erste Verbindungen 3 jeweils mit einem ersten Switch-Element 4a der ersten Untergruppe 11a beziehungsweise einem zweiten Switch-Element 4b der zweiten Untergruppe 11b verbunden. Die beiden Switch-Elemente 4a und 4b bilden zusammen eine Switch-Anordnung der I/O-Gruppe 7. Innerhalb der ersten Untergruppe 11a und der zweiten Untergruppe 11b sind das erste Switch-Element 4a beziehungsweise das zweite Switch-Element 4b über jeweils eine einzelne zweite Verbindung 8 direkt mit den I/O-Komponenten 2a und 2b beziehungsweise 2c und 2d verbunden. Somit kann auch beim Ausfall eines beliebigen Teils, beispielsweise eines Servermoduls 1, einer I/O-Komponente 2, eines Switch-Elementes 4 oder einer der Verbindungen 3 oder 8 eine Datenverarbeitung fortgeführt werden.

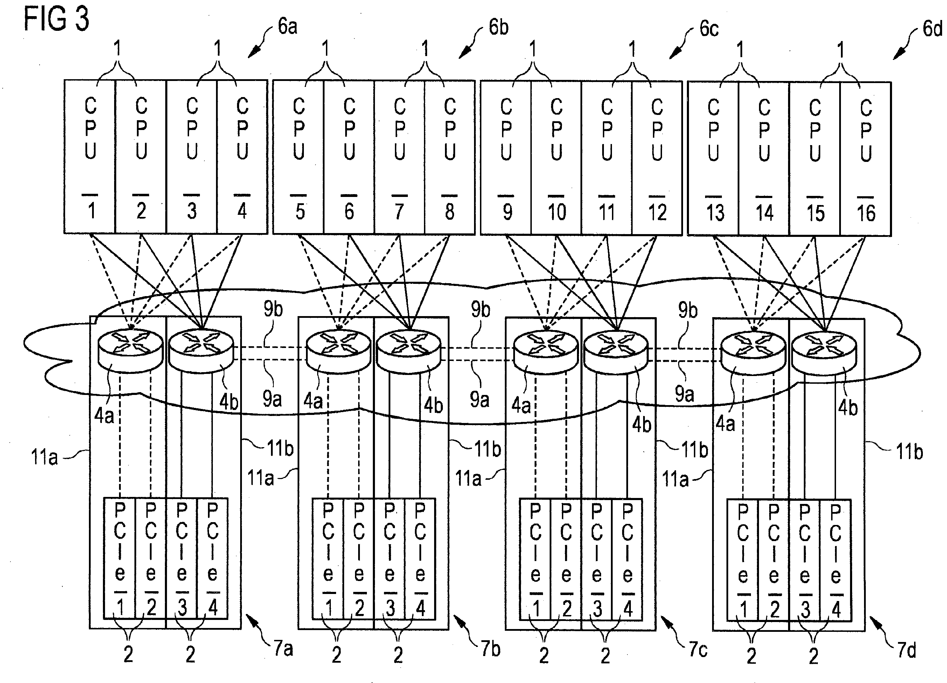

Dabei ist es nicht erforderlich, über die in der Figur 2 nur angedeuteten dritten Verbindungen 9 auf benachbarte I/O-Gruppen 7 zuzugreifen. Fällt beispielsweise das erste Switch-Element 4a oder die erste I/O-Komponente 2a aus, kann das erste Servermodul 1a ein durch ihn ausgeführtes Programm unter Verwendung des zweiten Switch-Elementes 4b und der gleichartigen I/O-Komponente 2c fortsetzen. Lediglich wenn mindestens zwei der jeweils zueinander redundanten Komponenten der I/O-Gruppe 7 ausfallen, ist ein Zugriff über die dritten Verbindungen 9 auf Komponenten von benachbarter I/O-Gruppen 7 erforderlich, wie es nachfolgend unter Bezugnahme auf die Figur 3 beschrieben wird.

Figur 3 zeigt die Verbindung einer Mehrzahl von Gruppen 7 und Untergruppen 11 gemäß Figur 2 in einem modularen Serversystem 5. Im in der Figur 3 dargestellten Ausführungsbeispiel greifen insgesamt 16 Servermodule 1, die in vier gleich große Servergruppen 6a bis 6d von je vier Servermodulen 1 gegliedert sind, auf insgesamt 16 I/O-Komponenten zu, die ebenfalls in vier I/O-Gruppen 7a bis 7d mit jeweils vier I/O-Komponenten 2 gegliedert sind. Dabei ist jede der I/O-Gruppen 7a bis 7d in eine erste Untergruppe 11a und eine zweite Untergruppe 11b untergliedert, wie dies oben bezüglich der Figur 2 beschrieben ist.

Um auch eine Redundanz bezüglich der Verbindungen zwischen verschiedenen I/O-Gruppen 7 herzustellen, sind beispielsweise zwei gesonderte dritte Verbindungen 9a und 9b zwischen zwei benachbarten I/O-Gruppe 7 vorgesehen. Anstelle der dargestellten zwei Verbindungen 9a und 9b können auch andere Verbindungstopologien Verwendung finden. Die Verbindungen 9a und 9b können beispielsweise über eine gemeinsam genutzte Leiterplatte wie die Backplane des modularen Serversystems 5 bereitgestellt werden. Im Ausführungsbeispiel gemäß der Figur 3 ist dabei jeweils das Switch-Element 4a der ersten Untergruppe 11a einer jeden I/O-Gruppe 7 mit der oder den Nachbarverbindungen 9a gekoppelt und das Switch-Element 4b der zweiten Untergruppe 11b einer jeden I/O-Gruppe 7 mit der oder den Nachbarverbindungen 9b gekoppelt. Im Ergebnis ergibt sich ein vollständig redundantes modulares Serversystem 5, das einen besonders hohen Grad an Verfügbarkeit, Leistungsfähigkeit und Flexibilität bietet.

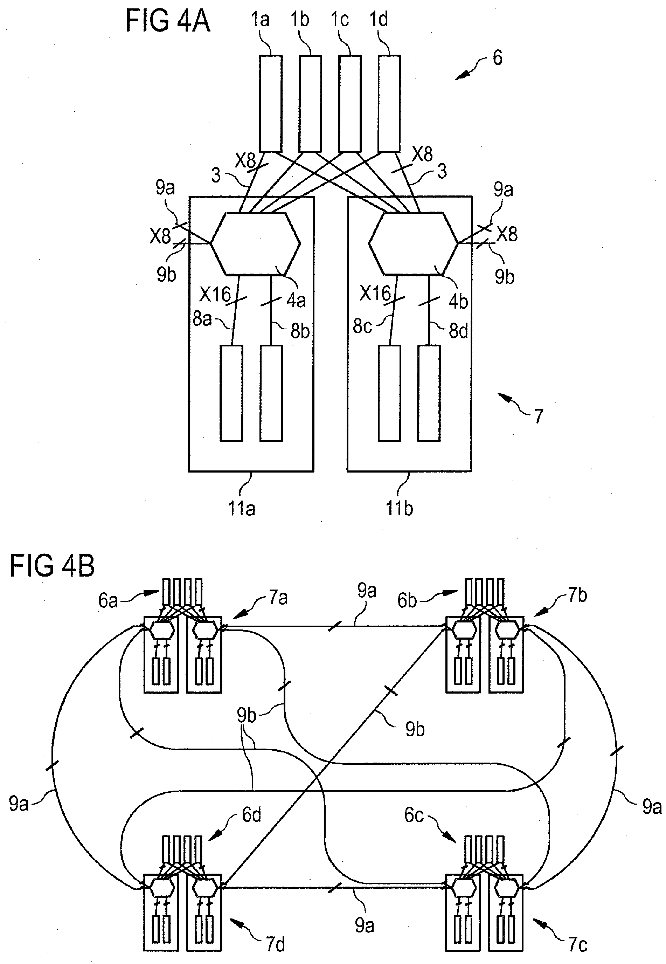

Figur 4A zeigt ein weiteres mögliches Verbindungsschema für zwei Switch-Elemente 4a und 4b einer redundanten I/O-Gruppe 7 mit zwei Untergruppen 11a und 11b. Im Ausführungsbeispiel handelt es sich bei den ersten Verbindungen 3 zwischen den Switch-Elementen 4a oder 4b und einem von insgesamt vier Servermodulen 1a bis 1d einer Servergruppe 6 jeweils um PCI-Express-X8-Verbindungen mit jeweils acht differenziellen Leitungspaaren zum Senden und Empfangen. Die zweiten Verbindungen 8a bis 8d zwischen den Switch-Elementen 4a und 4b und vier I/O-Komponenten 2a bis 2d sind im Ausführungsbeispiel als PCI-Express-X16-Verbindungen mit jeweils 16 differenziellen Leitungspaaren zum Senden und Empfangen ausgeführt. Zusätzlich sind an jedes Switch-Element 4a und 4b zwei dritte Verbindungen 9a und 9b in der Form von PCI-Express-X8-Verbindungen mit jeweils acht differenziellen Leitungspaaren zum Senden und Empfangen vorgesehen. Somit eignen sich beispielsweise bekannte PCI-Express-Switch-Bausteine mit 81 frei konfigurierbaren PCI-Express Lanes. Dabei werden die Anschlüsse für die Verbindungen 3 und 8 jeweils als Endpunkte konfiguriert, während die Anschlüsse für die Verbindungen 9 als Routing-Verbindungen konfiguriert werden. Der verbleibende 81. Anschluss wird in einer Ausgestaltung zu Steuerzwecken genutzt und ist beispielsweise mit anderen Switch-Elementen, einem Systemmanagementbaustein oder einer sonstigen Steuerkomponente des Serversystems gekoppelt.

Durch die unterschiedliche Auslegung der Verbindungen können deren Leistungsfähigkeiten an die Bedürfnisse des modularen Serversystems 5 angepasst werden. Beispielsweise kann eine besonders leistungsfähige I/O-Komponente 2a, wie etwa ein Massenspeichersystem, das von zwei Servermodulen 1a und 1b zeitgleich genutzt wird, über eine zweite Verbindung 8a mit einer höheren Verbindungsgeschwindigkeit als die zwei ersten Verbindungen 3 der Servermodule 1a und 1b an das Switch-Element 4a angebunden werden. Von Vorteil dabei ist, dass die zweiten Verbindungen mit einer hohen Anzahl von Leiterbahnen sich nur innerhalb der I/O-Gruppe 7 erstrecken, während die ersten Verbindungen 3 und die dritten Verbindungen 9 eine geringere Anzahl an Leiterbahnen erfordern.

Da jeder der Servermodule 1a bis 1d der Servergruppe 6 bereits direkt mit beiden Switch-Elementen 4a und 4b gekoppelt ist, kann auf eine direkte Querverbindung zwischen dem ersten Switch-Element 4a und zweiten Switch-Element 4b verzichtet werden. Stattdessen werden die Switch-Elemente 4a und 4b mit Switch-Elementen 4 anderer I/O-Gruppen 7 verbunden, um eine Connection Fabric 10 herzustellen, die beispielsweise zur Implementierung eines modularen Serversystems 5 mit 16 Servermodulen 1 und 16 I/O-Komponenten 2 gemäß Figur 4B geeignet ist.

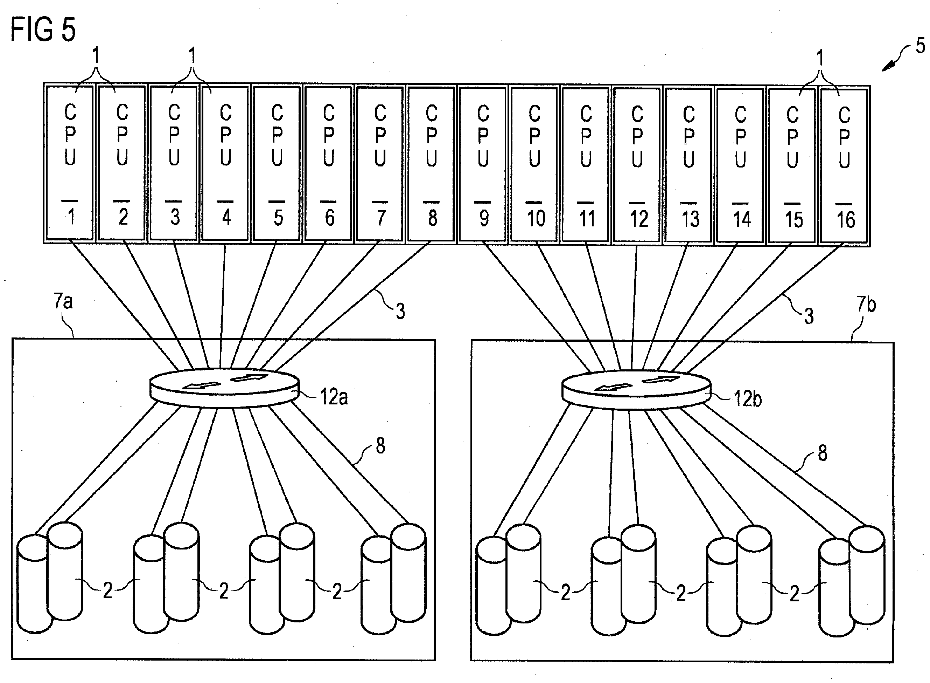

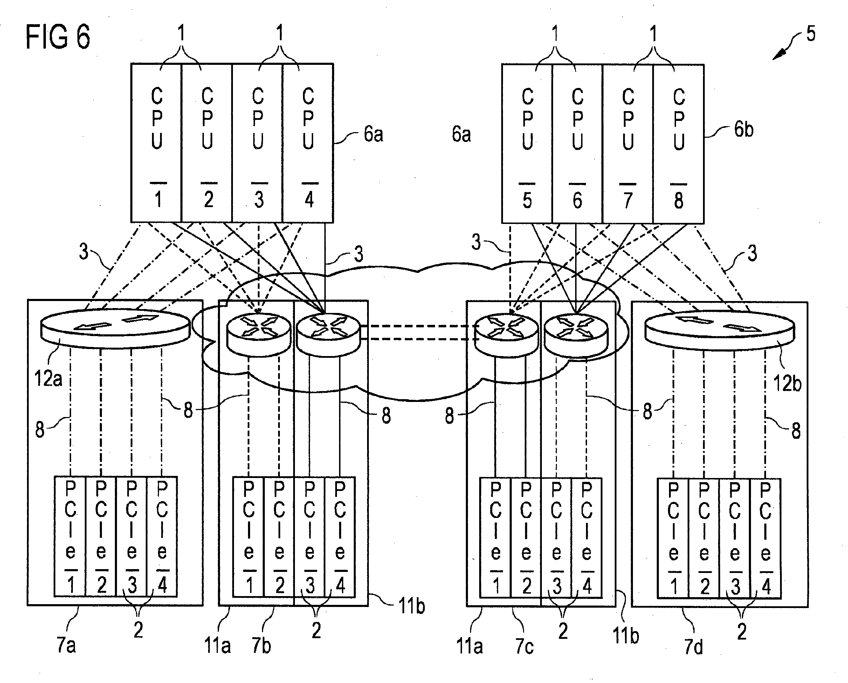

Neben der Möglichkeit, eine verteilte, modulare Connection Fabric 10 aufzubauen, bietet die beschriebene modulare Serverarchitektur auch die Möglichkeit, unterschiedliche Verbindungstopologien in einem einheitlichen modularen Serversystem zu implementieren. Dies ist beispielsweise in den Figuren 5 und 6 dargestellt.

In der in Figur 5 dargestellten Topologie wurden anstelle von Switch-Elementen, Retimer-Bausteine 12a und 12b in zwei I/O-Gruppen 7a und 7b mit jeweils acht I/O-Komponenten 2 eingesetzt. Im Ergebnis kann jeder von 16 Servermodulen 1 somit nur auf eine einzelne I/O-Komponente 2, im Ausführungsbeispiel gemäß Figur 6 beispielsweise eine so genannte Solid State Disc (SSD) zugreifen. Der Zugriff auf benachbarten I/O-Komponenten entweder derselben I/O-Gruppe 7 oder der benachbarten I/O-Gruppen 7 ist dagegen nicht möglich.

Es ist zu beachten, dass die ersten Verbindungen 3 und die zweiten Verbindungen 8 genau den Verbindungen entsprechen, die zur Herstellung einer verteilten modularen Switcharchitektur benötigt werden. Diese Tatsache ermöglicht die besonders einfache und kostengünstige Ausführung unterschiedlicher Konfigurationen mit denselben Basiskomponenten. Insbesondere ist es nicht erforderlich, unterschiedliche Servermodule 1, I/O-Komponenten 2, Backplanes oder Midplanes zur Verwirklichung unterschiedlicher Systemarchitekturen vorzusehen. Lediglich die aktiven Komponenten und eingesetzte interne Verbindungsmatrix der I/O-Gruppen 7 muss entsprechend angepasst werden.

Somit kann entsprechend den Anforderungen eines Kunden, durch bloßen Ersatz eines eingesetzten I/O-Moduls, das die Funktionselemente einer I/O-Gruppe 7 beinhaltet, die Verbindungstopologie des modularen Serversystems 5 geändert werden. Beispielsweise können für einen Kunden, der auf eine Hochverfügbarkeit der I/O-Komponenten 2 verzichten möchte, verhältnismäßig kostengünstige Retimer-Bausteine 12 anstelle von Switch-Elementen 4 eingesetzt werden.

Selbstverständlich ist auch ein Mischbetrieb beider Topologien möglich, wie dies beispielsweise in der Figur 6 dargestellt ist. Das darin dargestellte modulare Serversystem 5 umfasst zwei Servergruppen 6a und 6b und vier I/O-Gruppen 7a bis 7d. Die I/O-Komponenten 2 der ersten und vierten I/O-Gruppe 7a bzw. 7d sind über Retimer-Bausteine 12a bzw. 12b direkt mit jeweils einem der Servermodule 1 verbunden.

Beispielsweise handelt es sich um Coprozessorkarten, die einem Prozessor eines der Servermodule 1 jeweils als nicht teilbare Ressource zugeordnet sind. Die übrigen I/O-Komponenten 2, beispielsweise Netzwerkkarten mit mehreren logischen oder physikalischen Netzwerkschnittstellen, sind wie unter Bezugnahme auf die Figuren 2 und 3 beschrieben über Switch-Elemente 4a bis 4d redundant mit sämtlichen Servermodulen 1 des modularen Serversystems 5 verbunden. Dabei sind sie wie oben beschrieben in jeweils zwei redundante Untergruppen 11a und 11b je I/O-Gruppe 7 aufgeteilt.

Auch bei dieser Konfiguration ist es nicht erforderlich, die beispielsweise auf einer Backplane vorgesehenen Verbindungen zu ändern. Im Ausführungsbeispiel werden die Verbindungen 3 zwischen Servermodulen 1 und Retimer-Bausteinen 12 über PCI-Express-X16 Verbindungen hergestellt. Die Verbindungen zwischen einem Servermodul 1 und je einem der zwei direkt damit gekoppelten Switch-Elementen 4 wird über PCI-Express-X8 Verbindungen hergestellt. Im Ergebnis ergibt sich somit für jede der I/O-Gruppen und unabhängig von deren interner Topologie ein Bedarf für 16 PCI-Express Lanes je Servermodul 1 bzw. 64 PCI-Epress-Lanes je I/O-Gruppe 7.

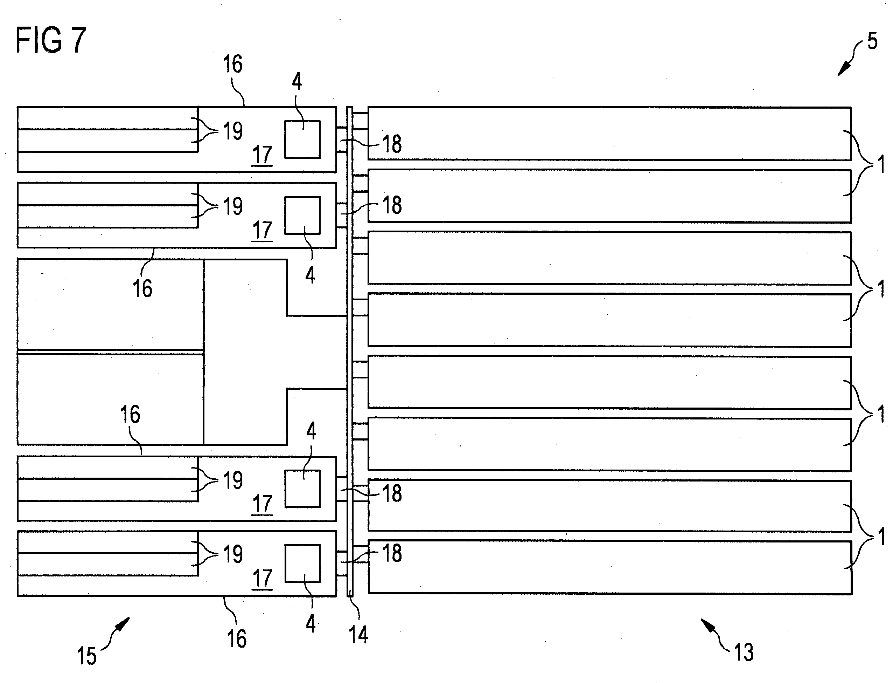

Figur 7 zeigt eine Aufsicht auf ein Gehäuse eines modularen Serversystems 5. Beispielsweise handelt es sich um ein so genanntes Blade-Serversystem das zur Aufnahme einer Mehrzahl von Servermodulen 1 eingerichtet ist.

Die in einem vorderen Gehäuseabschnitt 13 aufgenommenen Servermodule 1 werden über geeignete Steckverbinder mit einer Midplane 14 gekoppelt. Bei der Midplane 14 handelt es sich um eine gemeinsam genutzte Leiterplatte mit einer Vielzahl von elektrischen Verbindungen, die im Ausführungsbeispiel keine aktiven Komponenten umfasst.

Auf der Rückseite der Midplane 14 sind Steckverbinder zum Anschluss von weiteren Komponenten des Bladeserversystems in einem hinteren Gehäuseabschnitt 15 angeordnet. Neben allgemeinen Infrastrukturkomponenten, wie insbesondere Netzteilen und Systemlüftern, sind in dem modularen Serversystem 5 gemäß Figur 7 auch vier I/O-Module 16 angeordnet, die zur Aufnahme von I/O-Komponenten 2 geeignet sind. Beispielsweise eignet sich jedes I/O-Modul 16 zur Aufnahme von jeweils zwei PCI-Express-Erweiterungskarten 19. Die I/O-Module 16 umfassen jeweils eine Modulleiterplatte 17 mit einem darauf angeordneten Switch-Element 4 sowie einem Steckverbinder 18 zur elektrischen Kopplung des I/O-Moduls 16 mit der Midplane 14.

Zusätzlich können weitere I/O-Module, gegebenenfalls mit abweichendem Formfaktor, an anderen Stellen des Gehäuses angeordnet sein. Beispielsweise ist es möglich, weitere I/O-Module zur Aufnahme von Massenspeichern, die nicht die Bauhöhe einer PCI-Express-Erweiterungskarte aufweisen, zwischen oder unter den Netzteilen des modularen Serversystems 5 anzuordnen.

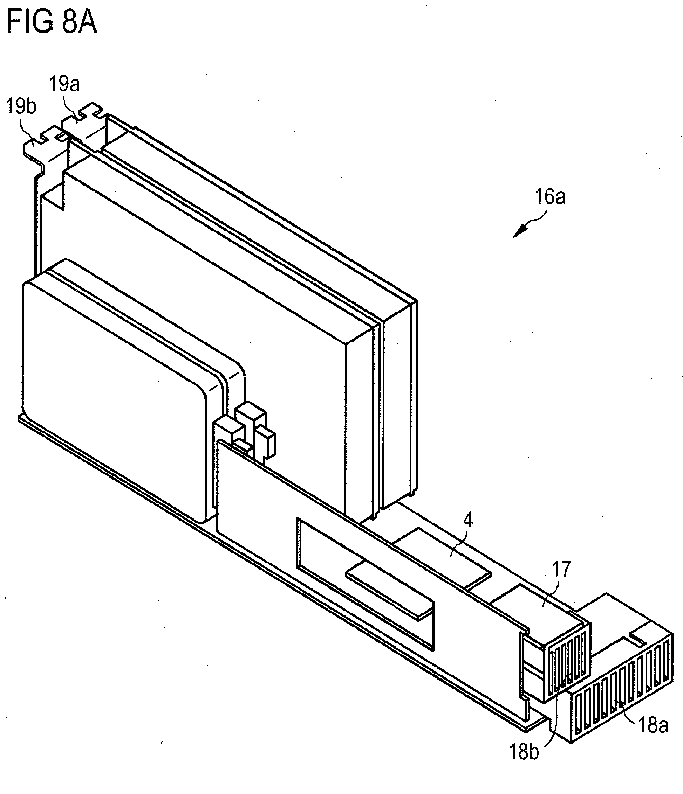

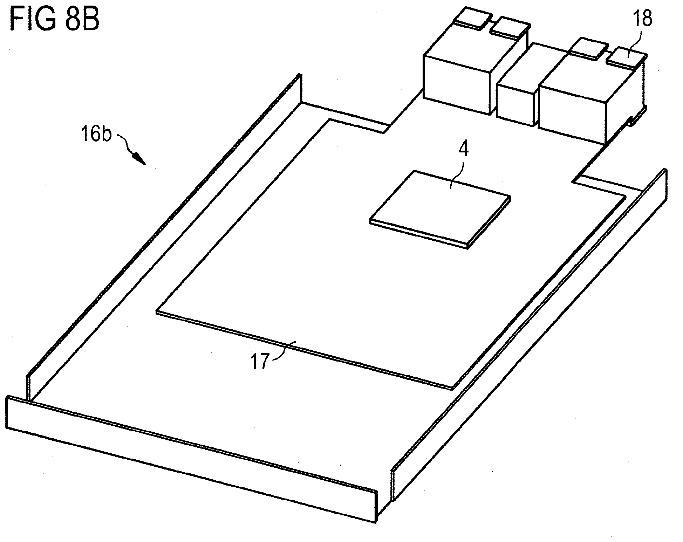

In den Figuren 8A und 8B sind beispielhafte Ausgestaltungen von unterschiedlichen I/O-Modulen 16a und 16b dargestellt.

Das I/O-Modul 16a gemäß Figur 8A dient beispielsweise zur Aufnahme von zwei PCI-Express-Erweiterungskarten 19a und 19b. Auf der Leiterplatte 17 ist ein Switch-Element 4 angeordnet, dass in zwei PCI-Express-X16-Steckplätzen aufgenommene Erweiterungskarten 19a und 19b über den Steckverbinder 18a wahlweise mit unterschiedlichen Servermodulen 1 verbinden kann. Über einen weiteren Steckverbinder 18b können über die Midplane 14 auch dritte Verbindungen 9 zu anderen I/O-Modulen 16 hergestellt werden.

Das I/O-Modul 16b gemäß Figur 8B dient zur Aufnahme einer Vielzahl von nichtflüchtigen Speicherbausteinen, die gemeinsam ein Massenspeichersystem bilden. In der in Figur 8B dargestellten Ausgestaltung sind die nichtflüchtigen Speicherbausteine unmittelbar auf der Modulleiterplatte 17 des I/O-Moduls 16b angeordnet. Daneben ist auf der Leiterplatte 17 auch ein Switch-Element 4 angeordnet, so dass unterschiedliche Datenverbindungen von unterschiedlichen Servermodulen 1 mit den nicht flüchtigen Speicherbausteinen hergestellt werden können. Das I/O-Modul 16b weist einen Steckverbinder 8 zum Herstellen von zweiten Verbindungen 8 mit Servermodulen 1 und dritten Verbindungen 9 mit anderen I/O-Modulen 16 auf. Weitere Steckverbinder oder Anschlüsse sind nicht erforderlich, so dass sich das I/O-Modul 16b auch zum Einbau an unzugänglichen Stellen des modularen Serversystems 5 eignet.

Die beschriebene Architektur erlaubt einen Aufbau von modularen Serversystemen 5, bei denen eine Vielzahl unterschiedlicher Verbindungstopologien zwischen einzelnen Servermodulen 1 und I/O-Komponenten 2 verwirklicht werden können. Dabei können durch geeignete Wahl der Busbreiten von Verbindungen 3, 8 und 9 sowie eingesetzten Komponenten der Connection Fabric 10 unterschiedliche Datenübertragungsgeschwindigkeiten und -modi zwischen einzelnen Servermodulen 1 und damit gekoppelten I/O-Komponenten 2 verwirklicht werden.

Die Architektur wurde unter Bezugnahme auf unterschiedliche Serversysteme beschrieben, bei denen ein oder zwei Switch-Elemente 4 einer Switch-Anordnung jeweils den I/O-Gruppen 7 zugeordnet und auch dort angeordnet sind. Solange die logische Zuordnung von I/O-Gruppen 7 zu genau einer Servergruppe 6 beibehalten wird, können Teile der oder die gesamte Switch-Anordnung selbst natürlich auch an anderer Stelle des modularen Serversystems angeordnet werden, zum Beispiel auf einer Back- oder Midplane 14 oder in einer anderen Komponente wie einem Modul zur Aufnahme einer Servergruppe.

Darüber hinaus ist aber auch möglich, die gesamte Architektur umzukehren, da heißt die Servergruppen jeweils genau einer I/O-Gruppe zuzuordnen. In diesem Fall sind die entsprechenden Switch-Elemente bzw. Anordnungen logisch den Servergruppen zugeordnet und bevorzugt auch in räumlicher Nähe zu den Servermodulen angeordnet. In diesem Fall ergibt sich der zusätzlich Vorteil, dass eine direkte Hochgeschwindigkeitskommunikation zwischen den Servermodulen einer Servergruppe über die logisch der Servergruppe zugeordnete Switch-Anordnung ermöglicht wird. Auch hier ist alternativ eine Anordnung auf einer Back- oder Midplane oder einer anderen Komponente wie den I/O-Modulen möglich.

Die Funktionsweise entspricht der der oben genannten Ausführungsbeispiele, wobei im allgemeinen Fall die Funktionen und Verbindungen der jeweiligen Server- und I/O-Gruppen jeweils miteinander vertauscht werden. Den Ausführungsbeispielen gemäß den Figuren 1 bis 6 liegt überdies eine 1:1-Zuordnung zwischen Servergruppen 6 einerseits und I/O-Gruppen 7 andererseits zugrunde, so dass sich außer der logischen Zuordnung der Switch-Anordnungen zu den Servergruppen 6 keine weiteren Änderungen ergeben.

Die beschriebenen Architekturen erlauben die Schaffung einer Redundanz bezüglich der verwendeten Servermodule 1, Switch-Elemente 4 und I/O-Komponenten 2 und Verbindungen 3, 8 und 9 sowie die einfache Umschaltung auf redundant vorgehaltene Ersatzkomponenten. Gleichzeitig wird die erforderliche Connection Fabric 10 gegenüber einer vollständigen Verknüpfung von jedem Servermodul 1 mit jeder I/O-Komponente 2 deutlich reduziert.

Somit bieten die beschriebenen Architekturen unter anderem folgende Vorteile:
- Einen optimierten gemeinsamen Zugriff auf I/O-Komponenten 2 einer lokalen I/O-Gruppe 7 durch Servermodule 1 einer Servergruppe 6.
- Eine reduzierte Komplexität einer Midplane 14.
- Die Möglichkeit, auch I/O-Komponenten 2 von entfernten I/O-Gruppen 7 zu nutzen.
- Die Schaffung einer Redundanz bezüglich der Verbindungen 3, 8 und 9 zwischen Servermodulen 1 und I/O-Komponenten 2.
- Eine lineare Skalierung der Komplexität und Kosten der Connection Fabric 10 in Abhängigkeit der Bestückung des modularen Serversystems 5.
- Die Möglichkeit der Kombination unterschiedlicher Verbindungstopographien in einem einzigen modularen Serversystem 5.
- Die Möglichkeit zur Schaffung von Hotplug-Fähigkeiten für die eingesetzten I/O-Komponenten 2 und/oder I/O-Module 16.
- Die Möglichkeit zur Schaffung einer Transparenz bezüglich der auf den Servermodulen ablaufenden Betriebssystemen und Programmen durch die Verlagerung der Switching und Redunanz-Funktionalität in die PCI-Express Connection Fabric 10.

Die in den Ausführungsbeispielen gezeigten und oben beschriebenen Einzelheiten können in vielfältiger Weise miteinander kombiniert werden, um die jeweils beschriebenen Vorteile und Wirkungen zu erzielen.

### Bezugszeichenliste

- 1: Servermodul
- 2: I/O-Komponente
- 3: erste Verbindung
- 4: Switch-Element
- 5: modulares Serversystem
- 6: Servergruppe
- 7: I/O-Gruppe
- 8: zweite Verbindung
- 9: dritte Verbindung
- 10: Connection Fabric
- 11: Untergruppe
- 12: Retimer-Baustein
- 13: vorderer Gehäuseabschnitt
- 14: Midplane
- 15: hinterer Gehäuseabschnitt
- 16: I/O-Modul
- 17: Modulleiterplatte
- 18: Steckverbinder
- 19: PCI-Express-Erweiterungskarte

## Patentansprüche

1. Modulares Serversystem (5), umfassend
- eine Mehrzahl von Servergruppen (6), wobei jede Servergruppe (6) zur Aufnahme einer Mehrzahl von Servermodulen (1) eingerichtet ist, und
- eine Mehrzahl von I/O-Gruppen (7), wobei jede I/O-Gruppe (7) zur Aufnahme einer Mehrzahl von I/O-Komponenten (2) eingerichtet ist und eine Switch-Anordnung mit mindestens einem Switch-Element (4) aufweist,
wobei
- jede der Mehrzahl von I/O-Gruppen (7) genau einer der Mehrzahl von Servergruppen (6) zugeordnet ist,
- die Switch-Anordnung einer jeden I/O-Gruppe (7) mit jedem der Mehrzahl der I/O-Komponenten (2) der I/O-Gruppe (7) datentechnisch direkt gekoppelt ist,
- die Switch-Anordnung einer jeden I/O-Gruppe (7) mit jedem der Mehrzahl der Servermodule (1) der der I/O-Gruppe (7) zugeordneten Servergruppe (6) datentechnisch direkt gekoppelt ist, und
- die Switch-Anordnung einer jeden I/O-Gruppe (7) mit mindestens einer anderen Switch-Anordnung einer anderen I/O-Gruppe (7) datentechnisch gekoppelt ist.

2. Modulares Serversystem (5) nach Anspruch 1, bei dem wenigstens eine erste I/O-Gruppe (7a) der Mehrzahl von I/O-Gruppen (7) wenigstens eine erste Untergruppe (11a) mit einem ersten Switch-Element (4a) und eine zweite Untergruppe (11b) mit einem zweiten Switch-Element (4b) umfasst, das erste Switch-Element (4a) mit jedem Servermodul (1) einer der ersten I/O-Gruppe (7a) zugeordneten ersten Servergruppe (6a) datentechnisch direkt gekoppelt ist und das zweite Switch-Element (4b) mit jedem Servermodul (1) der ersten Servergruppe (6a) datentechnisch direkt gekoppelt ist.

3. Modulares Serversystem (5), umfassend
- eine Mehrzahl von Servergruppen (6), wobei jede Servergruppe (6) zur Aufnahme einer Mehrzahl von Servermodulen (1) eingerichtet ist und eine Switch-Anordnung mit mindestens einem Switch-Element (4) aufweist, und
- eine Mehrzahl von I/O-Gruppen (7), wobei jede I/O-Gruppe (7) zur Aufnahme einer Mehrzahl von I/O-Komponenten (2) eingerichtet ist,
wobei
- jede der Mehrzahl von Servergruppen (6) genau einer der Mehrzahl von I/O-Gruppen (7) von zugeordnet ist,
- die Switch-Anordnung einer jeden Servergruppe (6) mit jedem der Mehrzahl der Servermodule (1) der Servergruppe (6) datentechnisch direkt gekoppelt ist,
- die Switch-Anordnung einer jeden Servergruppe (6) mit jedem der Mehrzahl der I/O-Komponenten (2) der der Servergruppe (6) zugeordneten I/O-Gruppe (7) datentechnisch direkt gekoppelt ist, und
- die Switch-Anordnung einer jeden Servergruppe (6) mit mindestens einer anderen Switch-Anordnung einer anderen Servergruppe (6) datentechnisch gekoppelt ist.

4. Modulares Serversystem (5) nach einem der Ansprüche 1 bis 3, weiter aufweisend wenigstens eine gemeinsame Leiterplatte, insbesondere eine Backplane oder Midplane (14), mit einer Mehrzahl von ersten elektrischen Verbindungen (3) zur datentechnischen Kopplung der Servergruppen (6) mit den jeweils zugeordneten I/O-Gruppen (7).

5. Modulares Serversystem (5) nach Anspruch 4, bei dem die wenigstens eine gemeinsame Leiterplatte eine Mehrzahl von weiteren elektrischen Verbindungen (9) zur datentechnischen Kopplung von Switch-Anordnungen untereinander aufweist.

6. Modulares Serversystem (5) nach einem der Ansprüche 1 bis 5, bei dem die datentechnische Kopplung über Punkt-zu-Punkt-Verbindungen (3, 8, 9) mit einer Mehrzahl von Datenleitungen, insbesondere gemäß dem PCI-Express-Standard, hergestellt wird.

7. Modulares Serversystem (5) nach einem der Ansprüche 1 bis 6, bei dem wenigstens eine erste I/O-Komponente der Mehrzahl von I/O-Komponenten (2) von einer Mehrzahl von Servermodulen (1) gemeinsam nutzbar ist, wobei es sich bei der ersten I/O-Komponenten (2) insbesondere um eine Netzwerkkomponente mit einer Mehrzahl von Funktionseinheiten oder um eine Massenspeicherkomponente handelt.

8. Modulares Serversystem,(5) nach einem der Ansprüche 1 bis 7, bei dem die Mehrzahl von I/O-Komponenten (2) mindestens einer ersten I/O-Gruppe (7a) der Mehrzahl von I/O-Gruppen (7) und/oder die Mehrzahl von Servermodulen (1) wenigstens einer zugeordneten ersten Servergruppe (6a) der Mehrzahl von Servergruppen (6) ein redundantes System bilden, so dass beim Ausfall einer der I/O-Komponenten (2) der ersten I/O-Gruppe (7a) und/oder beim Ausfall einer der Servermodule (1) der ersten Servergruppe (6a) die verbleibenden I/O-Komponenten (2) der ersten I/O-Gruppe (7a) und die verbleibenden Servermodule (1) der ersten Servergruppe (6a) die Funktion der ausgefallenen Komponenten übernehmen können.

9. I/O-Modul (16) zur Verwendung in einem modularen Serversystem (5) nach einem der Ansprüche 1 bis 8, umfassend:
- wenigstens eine Modulleiterplatte (17),
- wenigstens einen auf der Modulleiterplatte (17) angeordneten ersten Anschluss für eine erste I/O-Komponente (2a),
- wenigstens einen auf der Modulleiterplatte (17) angeordneten zweiten Anschluss für eine zweite I/O-Komponente (2b),
- wenigstens einen auf der Modulleiterplatte angeordneten Steckverbinder (18) zur datentechnischen Kopplung des I/O-Moduls (16) mit einer gemeinsamen Leiterplatte des modularen Serversystems (5), und
- wenigstens ein auf der Modulleiterplatte (17) angeordnetes Switch-Element (4) zur wahlweisen Herstellung von Datenverbindungen zwischen einer vorbestimmten Gruppe (6) von Servermodulen (1) des modularen Serversystems (5), die dem I/O-Modul (16) zugeordnet ist, und.der ersten und/oder zweiten I/O-Komponente (2a, 2b) sowie zwischen der vorbestimmten Gruppe (6) von Servermodulen (1) des modularen Serversystems (5) und einem Switch-Element (4) eines gleichartigen I/O-Moduls (16).

10. Switching-Verfahren für ein modulares Serversystem (5),
- bei dem erste Datenverbindungen zwischen einer ersten Komponente eines ersten Typs einer ersten Gruppe von gleichartigen Komponenten, insbesondere zwischen einem Servermodul (1) einer Mehrzahl von Servermodulen einer ersten Servergruppe (6), mit einer zweiten Komponente eines zweiten Typs einer zweiten Gruppe von gleichartigen Komponenten, insbesondere einer I/O-Komponente (2) einer Mehrzahl von I/O-Komponenten einer ersten I/O-Gruppe (7), direkt über ein erstes Switch-Element (4) der zweiten Gruppe hergestellt werden und
- bei dem zweite Datenverbindungen zwischen der ersten Komponente der ersten Gruppe mit einer dritten Komponente des zweiten Typs, insbesondere einer I/O-Komponente (2) einer Mehrzahl von I/O-Komponenten einer zweiten I/O-Gruppe (7), indirekt über das erste Switch-Element (4) und ein zweites Switch-Element (4) der dritten Gruppe hergestellt werden.

11. Switching-Verfahren nach Anspruch 10, bei dem die erste Datenverbindung eine höhere Datenübertragungsrate und/oder eine geringere Latenzzeit aufweisen als die zweiten Datenverbindungen.

12. Switching-Verfahren nach Anspruch 10 oder 11, bei dem die ersten Datenverbindungen von der ersten Komponente der ersten Gruppe und der zweiten Komponente der zweiten Gruppe exklusiv nutzbar sind und bei dem die zweiten Datenverbindungen von einer Mehrzahl von Komponenten der ersten Gruppe und/oder einer Mehrzahl von drittenKomponenten (2) der dritten Gruppe (7) über ein Multiplexverfahren gemeinsam nutzbar sind

## Claims

1. A modular server system (5), comprising:
- a plurality of server groups (6), wherein each server group (6) is adapted to receive a plurality of server modules (1), and
- a plurality of I/O groups (7), wherein each I/O group (7) is adapted to receive a plurality of I/O components (2) and comprises a switch arrangement with at least one switch element (4),
wherein
- each of the plurality of I/O groups (7) is allocated to exactly one of the plurality of server groups (6),
- the switch arrangement of each I/O group (7) is directly coupled by a data link to each of the plurality of I/O components (2) of the I/O group (7),
- the switch arrangement of each I/O group (7) is directly coupled by a data link to each of the plurality of server modules (1) of the server group (6) allocated to the I/O group (7), and
- the switch arrangement of each I/O group (7) is coupled by a data link to at least one other switch arrangement of another I/O group (7).

2. The modular server system (5) according to claim 1, in which at least one first I/O group (7a) of the plurality of I/O groups (7) comprises at least one first subgroup (11a) with a first switch element (4a) and a second subgroup (11b) with a second switch element (4b), the first switch element (4a) is directly coupled by a data link to each server module (1) of a first server group (6a) allocated to the first I/O group (7a) and the second switch element (4b) is directly coupled by a data link to each server module (1) of the first server group (6a).

3. A modular server system (5), comprising:
- a plurality of server groups (6), each server group (6) adapted to receive a plurality of server modules (1) and comprising a switch arrangement with at least one switch element (4), and
- a plurality of I/O groups (7), wherein each I/O group (7) is adapted to receive a plurality of I/O components (2),
wherein
- each of the plurality of server groups (6) is allocated exactly one of the plurality of I/O groups (7),
- the switch arrangement of each server group (6) is directly coupled by a data link to each of the plurality of server modules (1) of the server group (6),
- the switch arrangement of each server group (6) is directly coupled by a data link to each of the plurality of I/O components (2) of the I/O group (7) allocated to the server group (6), and
- the switch arrangement of each server group (6) is directly coupled by a data link to at least one other switch arrangement of another server group (6).

4. The modular server system (5) according to one of claims 1 to 3, further comprising at least one shared printed circuit board, in particular a backplane or a midplane (14), with a plurality of first electrical connections (3) that couple the server groups (6) to the respective allocated I/O groups (7) by a data link.

5. The modular server system (5) according to claim 4, in which the at least one shared printed circuit board comprises a plurality of further electrical connections (9) that couple together the switch arrangements of the plurality of server groups by a data link.

6. The modular server system (5) according to one of claims 1 to 5, in which the coupling by a data link via point-to-point connections (3, 8, 9) is established with a plurality of data lines, in particular according to the PCI Express standard.

7. The modular server system (5) according to one of claims 1 to 6, wherein the at least one first I/O component of the plurality of I/O components (2) can be shared by a plurality of server modules (1), and the first I/O component (2) particularly is a network component with a plurality of functional units or a mass storage component.

8. The modular server system (5) according to one of claims 1 to 7, in which the plurality of I/O components (2) of at least one first I/O group (7a) of the plurality of I/O groups (7) and/or the plurality of server modules (1) of at least one allocated first server group (6a) of the plurality of server groups (6) form a redundant system so that on failure of one of the I/O components (2) of the first I/O group (7a) and/or on failure of one of the server modules (1) of the first server group (6a), the remaining I/O components (2) of the first I/O group (7a) and the remaining server modules (1) of the first server group (6a) are able to assume the function of the failed components.

9. An I/O module (16) for use in a modular server system (5) according to one of claims 1 to 8, comprising:
- at least one module printed circuit board (17),
- at least one first terminal arranged on the module printed circuit board (17) for a first I/O component (2a),
- at least one second terminal arranged on the module printed circuit board (17) for a second I/O component (2b),
- at least one plug connector (18) arranged on the module printed circuit board that couples the I/O module (16) to a shared printed circuit board of the modular server system (5) by a data link, and
- at least one switch element (4) arranged on the module printed circuit board (17) for selectively establishing data connections between a predetermined group (6) of server modules (1) of the modular server system (5) allocated to the I/O module (16), and the first and/or second I/O component (2a, 2b), as well as between the predetermined group (6) of server modules (1) of the modular server system (5) and a switch element (4) of a similar I/O module (16).

10. A switching method for a modular server system (5),
- in which first data connections are established between a first component of a first type of a first group of similar components, in particular between a server module (1) of a plurality of server modules of a first server group (6), and a second component of a second type of a second group of similar components, in particular an I/O component (2) of a plurality of I/O components of a first I/O group (7), via a first switch element (4) of the second group; and
- in which second data connections are established between the first component of the first group and a third component of the second type, in particular an I/O component (2) of a plurality of I/O components of a second I/O group (7), indirectly via the first switch element (4) and a second switch element (4) of the third group.

11. The switching method according to claim 10, in which the first data connections have a higher data rate and/or a lower latency than the second data connections.

12. The method according to claim 10 or 11, in which the first data connections can be used exclusively by the first component of the first group and the second component of the second group, and in which the second data connections can be shared by a plurality of components of the first group and/or a plurality of third components (2) of the third group (7) via a multiplex operation.

## Revendications

1. Système serveur (5) modulaire comprenant
- une pluralité de groupes de serveurs (6), chaque groupe de serveurs (6) étant conçu pour loger une pluralité de modules de serveurs (1), et
- une pluralité de groupes E/S (7), chaque groupe E/S (7) étant conçu pour loger une pluralité de composants E/S (2) et un dispositif de commutation doté d'au moins un élément de commutation (4),
- chacun de la pluralité de groupes E/S (7) étant attribué à exactement chacun de la pluralité de groupes de serveurs (6),
- le dispositif de commutation d'un groupe E/S (7) étant directement couplé, au point de vue des données, à chacun de la pluralité de composants E/S (2) du groupe E/S (7),
- le dispositif de commutation de chaque groupe E/S(7) étant directement couplé, au point de vue des données, à chacun de la pluralité de modules de serveurs (1) du groupe de serveurs (6) attribué au groupe E/S (7), et
- le dispositif de commutation de chaque groupe E/S (7) étant directement couplé, au point de vue des données, à au moins un autre dispositif de commutation d'un autre groupe E/S (7).

2. Système serveur (5) modulaire selon la revendication 1, dans lequel au moins un premier groupe E/S (7a) de la pluralité de groupes E/S (7) comprend au moins un premier sous-groupe (11a) doté d'un premier élément de commutation (4a) et un deuxième sous-groupe (11b) doté d'un deuxième élément de commutation (4b), dans lequel le premier élément de commutation (4a) est directement couplé, au point de vue des données, à chaque module de serveur (1) d'un premier groupe de serveurs (6a) attribué au premier groupe E/S (7a) et dans lequel le deuxième élément de commutation (4b) est directement couplé, au point de vue des données, à chaque module de serveur (1) du premier groupe de serveurs (6a).

3. Système serveur (5) modulaire comprenant
- une pluralité de groupes de serveurs (6), chaque groupe de serveurs (6) étant conçu pour loger une pluralité de modules de serveurs (1) et présentant un dispositif de commutation doté d'au moins un élément de commutation (4), et
- une pluralité de groupes E/S (7), chaque groupe E/S (7) étant conçu pour loger une pluralité de composants E/S (2),
- chacun de la pluralité de groupes de serveurs (6) étant attribué à exactement chacun de la pluralité de groupes E/S (7),
- le dispositif de commutation d'un groupe de serveurs (6) étant directement couplé, au point de vue des données, à chacun de la pluralité de modules de serveurs (1) du groupe de serveurs (6),
- le dispositif de commutation de chaque groupe de serveurs (6) étant directement couplé, au point de vue des données, à chacun de la pluralité de composants E/S (2) du groupe E/S (6) attribué au groupe de serveurs (6), et
- le dispositif de commutation de chaque groupe de serveurs (6) étant directement couplé, au point de vue des données, à au moins un autre dispositif de commutation d'un autre groupe de serveurs (6).

4. Système serveur (5) modulaire selon l'une quelconque des revendications 1 à 3, présentant en outre au moins un circuit imprimé commun, notamment un panneau arrière ou fond de panier (14), comprenant une pluralité de premières liaisons électriques (3) pour le couplage, au point de vue des données, des groupes de serveurs (6) aux groupes E/S (7) respectivement attribués.

5. Système serveur (5) modulaire selon la revendication 4, dans lequel l'au moins un circuit imprimé commun présente une pluralité de liaisons électriques supplémentaires (9) pour le couplage, au point de vue des données, de dispositifs de commutation entre eux.

6. Système serveur (5) modulaire selon l'une quelconque des revendications 1 à 5, dans lequel le couplage, au point de vue des données, est établi par l'intermédiaire de liaisons point à point (3, 8, 9) à l'aide d'une pluralité de lignes de données, notamment selon le standard PCI Express.

7. Système serveur (5) modulaire selon l'une quelconque des revendications 1 à 6, dans lequel au moins un premier composant E/S de la pluralité de composants E/S (2) est exploitable en commun par une pluralité de modules de serveurs (1), le premier composant E/S (2) étant notamment un composant de réseau doté d'une pluralité d'unités fonctionnelles ou un composant de mémoire de masse.

8. Système serveur (5) modulaire selon l'une quelconque des revendications 1 à 7, dans lequel la pluralité de composants E/S (2) d'au moins d'un premier groupe E/S (7a) de la pluralité de groupes E/S (7) et/ou la pluralité de modules de serveurs (1) d'au moins un premier groupe de serveurs (6a) correspondant de la pluralité de groupes de serveurs (6) forment un système redondant, de sorte que lors de la défaillance de l'un des composants E/S (2) du premier groupe E/S (7a) et/ou lors de la défaillance de l'un des modules de serveurs (1) du premier groupe de serveurs (6a), les composants E/S (2) restants du premier groupe E/S (7a) et les modules de serveurs (1) restants du premier groupe de serveurs (6a) peuvent assumer la fonction des composants défaillants.

9. Module E/S (16) destiné à être utilisé dans un système serveur (5) modulaire selon l'une quelconque des revendications 1 à 8, comprenant
- au moins un circuit imprimé modulaire (17),
- au moins une première connexion, disposée sur le circuit imprimé modulaire (17), pour un premier composant E/S (2a),
- au moins une deuxième connexion, disposée sur le circuit imprimé modulaire (17), pour un deuxième composant E/S (2a),
- au moins un connecteur (18) disposé sur le circuit imprimé de module, destiné au couplage, au point de vue des données, du module E/S (16) à un circuit imprimé commun du système serveur (5) modulaire, et
- au moins un élément de commutation (4) disposé sur le circuit imprimé modulaire (17) pour l'établissement sélectif de liaisons de données entre un groupe prédéterminé (6) de modules de serveurs (1) du système serveur (5) modulaire, lequel groupe est attribué au module E/S (16), et le premier et/ou deuxième composant E/S (2a, 2b) ainsi qu'entre le groupe prédéterminé (6) de modules de serveurs (1) du système serveur (5) modulaire et un élément de commutation (4) d'un module E/S (16) identique.

10. Procédé de commutation pour un système serveur (5) modulaire,
- dans lequel des premières liaisons de données entre un premier composant d'un premier type d'un premier groupe de composants identiques, notamment entre un module de serveur (1) d'une pluralité de modules de serveurs d'un premier groupe de serveurs (5), sont établies avec un deuxième composant d'un deuxième type d'un deuxième groupe de composants identiques, notamment un composant E/S (2) d'une pluralité de composants E/S d'un premier groupe E/S (7), directement par l'intermédiaire d'un premier élément de commutation (4) du deuxième groupe, et
- dans lequel des deuxièmes liaisons de données entre le premier composant du premier groupe sont établies avec un troisième composant du deuxième type, notamment un composant E/S (2) d'une pluralité de composants E/S d'un deuxième groupe E/S (7), indirectement par l'intermédiaire du premier élément de commutation (4) et d'un deuxième élément de commutation (4) du troisième groupe.

11. Procédé de commutation selon la revendication 10, dans lequel la première liaison de données présente un taux de transmission de données plus élevé et/ou une période de latence plus petite que les deuxièmes liaisons de données.

12. Procédé de commutation selon la revendication 10 ou 11, dans lequel les premières liaisons de données du premier composant du premier groupe et du deuxième composant du deuxième groupe sont exclusivement exploitables et dans lequel les deuxièmes liaisons de données sont exploitables en commun par une pluralité de composants du premier groupe et/ou par une pluralité de troisièmes composants (2) du troisième groupe (7) par l'intermédiaire d'un procédé de multiplexage.
